# EUROPÄISCHE PATENTSCHRIFT

(11) **EP 1 488 885 B1**
(45) Veröffentlichungstag und Bekanntmachung des Hinweises auf die Patenterteilung: **29.11.2006**
(21) Anmeldenummer: 04014097.2
(22) Anmeldetag: 16.06.2004
(51) Int. Cl.: B23Q 11/08

(54) **Gliederbahn, insbesondere für Werkzeugmaschinen**
Covering, particularly for machine tools
Tablier de protection, en particulier pour machines-outils

(30) Priorität: 18.06.2003 DE 10327537
(43) Veröffentlichungstag der Anmeldung: 22.12.2004
(73) Patentinhaber: Hennig Holding GmbH, 85551 Kirchheim (DE)
(72) Erfinder: Goellner, Willy, 61103 Rockford Illinois (US)
(74) Vertreter: Rau, Manfred

(56) Entgegenhaltungen:
- DE-A1- 10 065 065
- DE-A1- 10 065 092

## Beschreibung

Die Erfindung betrifft eine Gliederbahn, insbesondere eine Gliederschürze oder Abdeckschürze, zur Abdeckung von Öffnungen, insbesondere von Werkzeugmaschinen, mit Gliedern, die durch biegsame Elemente miteinander verbunden sind.

Eine derartige Gliederbahn ist aus der EP 1 042 104 B1 bekannt. Die Gliederbahn umfasst Glieder, die durch biegsame Elemente miteinander verbunden sind. Die biegsamen Elemente können aus einem elastischen Kunststoff hergestellt sein. Die Glieder sind im wesentlichen flach und rechteckig. Aufgrund der Elastizität der biegsamen Elemente, durch die die Glieder miteinander verbunden werden, kann es vorkommen, dass die Außenfläche der Gliederbahn nicht hinreichend eben ist.

Aus der DE 100 65 065 A1 ist eine Gliederschürze zur Abdeckung beweglicher Werkzeugmaschinenteile nach dem Oberbegriff des Anspruchs 1 bekannt, deren Glieder durch biegsame Elemente miteinander verbunden sind. Die Seitenflächen der Glieder sind radiusförmig ausgestaltet, so daß eine Drehbewegung um einen Radiuspunkt möglich ist. Ferner sind die Seitenflächen im weiteren Verlauf so ausgeformt, daß eine Rastfunktion für die ebene Ausrichtung der Glieder entsteht. Die Gliederschürze setzt einem von außen wirkenden Druck einen gewissen Widerstand entgegen.

Aufgabe der Erfindung ist es, eine Gliederbahn der eingangs angegebenen Art zu verbessern.

Erfindungsgemäß wird diese Aufgabe durch die Merkmale des Anspruchs 1 gelöst. Die äußere Seitenfläche eines Gliedes weist einen Vorsprung auf. Die benachbarte äußere Seitenfläche des benachbarten Gliedes weist eine entsprechende Vertiefung auf. Zwischen dem Vorsprung und der Vertiefung besteht ein Formschluß. Auf diese Weise ist gewährleistet, dass benachbarte Glieder ineinandergreifen, wodurch eine glatte Außenfläche sichergestellt werden kann. Ferner können auf die Gliederbahn wirkende Kräfte besser aufgenommen werden. Hierdurch kann eine glatte Außenfläche auch dann sichergestellt werden, wenn Kräfte auf die Gliederbahn einwirken.

Der Vorsprung und die Vertiefung sind von der ebenen Außenfläche beabstandet. Die Seitenfläche weist einen ersten Abschnitt auf, der an die ebene Außenfläche angrenzt und vorzugsweise im rechten Winkel dazu verläuft. Der Vorsprung und die Vertiefung beginnen erst im Abstand von der ebenen Außenfläche. Hierdurch können auf die Gliederbahn wirkende Kräfte noch besser aufgenommen werden. Insbesondere ist es möglich, den Vorsprung und die Vertiefung derart auszugestalten, daß sowohl von außen wirkende Kräfte als auch von innen wirkende Kräfte aufgenommen werden können. Ferner ist es möglich, den Vorsprung und die Vertiefung derart auszugestalten, daß auch auf die Gliederbahn wirkende Torsionsbelastungen aufgenommen werden können.

Vorteilhafte Weiterbildungen sind in den Unteransprüchen beschrieben.

Der Vorsprung kann einen dreieckförmigen Querschnitt aufweisen. Dementsprechend weist die Vertiefung in diesem Fall ebenfalls einen dreieckförmigen, im wesentlichen komplementären Querschnitt auf.

Stattdessen oder zusätzlich kann der Vorsprung einen trapezförmigen Querschnitt aufweisen. Die Vertiefung weist in diesem Fall einen entsprechenden trapezförmigen Querschnitt auf.

Ferner ist es möglich, daß der Vorsprung stattdessen oder zusätzlich einen halbkreisförmigen Querschnitt aufweist. Die Vertiefung weist dann einen entsprechenden Querschnitt auf. Der Halbkreis kann sich über 180° oder annähernd 180° erstrecken. Es ist allerdings auch möglich, daß er sich über einen geringeren Winkelbereich von beispielsweise 120 bis 180° erstreckt oder über einen noch geringeren Winkelbereich.

Vorzugsweise weist die Vertiefung sowohl in Richtung nach innen als auch in Richtungt nach außen jeweils eine Abstützflanke auf, um zu gewährleisten, daß Kräfte in beide Richtungen aufgenommen werden können. Dies ist bei einem dreieckförmigen, trapezförmigen und halbkreisförmigen bzw. annähernd halbkreisförmigen Querschnitt der Fall. Es sind allerdings auch andere Querschnittsformen, die diese Bedingung erfüllen, möglich.

Eine weitere vorteilhafte Weiterbildung ist dadurch gekennzeichnet, dass sich der Vorsprung und die Vertiefung über die gesamte Länge der Glieder erstrecken. Hierdurch kann der weitere, erfindungsgemäß allerdings nicht zwingend erforderliche Vorteil einer größeren Verwindungssteifigkeit erreicht werden. Ferner kann dadurch der weitere, ebenfalls erfindungsgemäß nicht zwingend erforderliche Vorteil einer besseren Abdichtung erreicht werden.

Ausführungsbeispiele der Erfindung werden nachstehend anhand der beigefügten Zeichnung im einzelnen erläutert. In der Zeichnung zeigt
- Fig. 1: drei zusammenhängende Glieder einer Gliederbahn in einer perspektivischen Darstellung, wobei die Vorsprünge der Glieder einen dreieckförmigen Querschnitt aufweisen,
- Fig. 2: zwei benachbarte Glieder der Gliederbahn gemäß Fig. 1 in Streckstellung in einer Seitenansicht,
- Fig. 3: zwei benachbarte Glieder der Gliederbahn gemäß Fig. 1 und 2 in abgewinkelter Stellung in einer Seitenansicht,
- Fig. 4: eine vergrößerte Einzelheit aus Fig. 2,
- Fig. 5: zwei benachbarte beabstandete Glieder der Gliederbahn gemäß Fig. 1 bis 4 in einer Seitenansicht vor der Verbindung,
- Fig. 6: eine abgewandelte Ausführungsform der Gliederbahn, bei der die Vorsprünge der Glieder einen trapezförmigen Querschnitt aufweisen, und
- Fig. 7: eine weitere abgewandelte Ausführungsform, bei der die Vorsprünge der Glieder einen halbkreisförmigen Querschnitt aufweisen.

Die in den Zeichnungsfiguren 1 bis 5 gezeigte Gliederbahn besteht aus Gliedern 10, 20, 30, die durch biegsame Elemente 40, 50 miteinander verbunden sind. Jedes Glied 10, 20, 30 umfasst eine ebene Außenfläche 11, 21, 31 und eine im wesentlichen ebene Innenfläche 12, 22, 32 sowie einen im wesentlichen rechteckigen Hohlraum 13, 23, 33. In den seitlichen Bereichen der Glieder 10, 20, 30 sind sowohl links als auch rechts jeweils eine im wesentlichen zylinderförmige Aufnahme 14, 15; 24, 25; 34, 35 vorgesehen. Die Aufnahmen 14 - 35 erstrecken sich über einen Winkel von mehr als 180°, im Ausführungsbeispiel über einen Winkel von etwa 300°. Sie sind durch Kanäle 16, 17; 26, 27; 36, 37 zu den Seitenflächen der Glieder 10, 20, 30 hin offen.

Jedes biegsame Element 40, 50 weist jeweils zwei Verdickungen 41, 42; 51, 52 auf, die durch einen Steg 43; 53 miteinander verbunden sind. Die Verdickungen 41 - 52 sind im wesentlichen zylinderförmig. Sie erstrecken sich über einen Winkelbereich von mehr als 180° und entsprechen in ihrer Form im wesentlichen der Form der Aufnahmen 14 - 35. Im verbundenen Zustand erstrecken sich die die Verdikkungen 41 - 52 verbindenden Stege 43; 53 durch die Kanäle 17 - 36 hindurch. Die biegsame Elemente 40; 50, insbesondere der Abstand der Verdickungen 41 - 52, sind unter Berücksichtigung der Elastizität der biegsamen Elemente 40; 50 derart bemessen bzw. gestaltet, dass die Seitenflächen benachbarter Glieder 10 - 30 in der Streckstellung (Fig. 2 und 4) fest bzw. _{"}satt" aneinanderliegen.

Durch die Kanäle 16 - 37 bzw. die biegsamen Elemente 40; 50 werden die Seitenflächen der Glieder 10 - 30 in jeweils eine äußere Seitenfläche und eine innere Seitenfläche geteilt. Die rechten äußeren Seitenflächen 18; 28; 38 weisen jeweils einen Vorsprung 19; 29; 39 auf. Die Vorsprünge 19 - 39 haben einen dreieckförmigen Querschnitt, wobei die Spitze des Dreiecks jeweils nach außen gerichtet ist. Ferner sind die Spitzen abgerundet. Der Winkel der Spitzen beträgt etwa 45 bis 60°. Die Vorsprünge 19 - 39 erstrecken sich über die gesamte Länge der Glieder 10-30.

Die Glieder 10 - 30 weisen auf ihrer jeweils linken äußeren Seitenfläche 60; 70; 80 eine Vertiefung 61; 71; 81 auf, die dem jeweils zugehörigen Vorsprung 19 - 39 entspricht. Die Vertiefungen 61 - 81 erstrecken sich über die gesamte Länge der Glieder 10 - 30. Sie sind als durchlaufende Nuten ausgestaltet. Ihr dreieckförmiger Querschnitt läuft auf den Grund im wesentlichen spitz zu, so dass zwischen der Abrundung der Spitzen der Vorsprünge 19 - 39 und dem Grund der jeweiligen durchlaufenden Nut 61 - 81 ein Freiraum verbleibt. Hierdurch wird sichergestellt, dass die Flanken der Vorsprünge 19 - 39 vollflächig an den Flanken der durchlaufenden Nuten 61 - 81 anliegen. Ferner liegen die die Vorsprünge 19 - 39 umgebende Teile der äußeren Seitenflächen 18 - 38 vollflächig an den die durchlaufenden Nuten 61 - 81 umgebenden Teile der äußeren Seitenflächen 60 - 80 vollflächig an.

Durch den Formschluß zwischen den Vorsprüngen 19 - 39 und den Nuten 61 - 81 ist gewährleistet, dass die Außenflächen 11 - 31 durchgehend fluchtend aneinanderliegen und eine durchgehende ebene Fläche bilden. Die Vorsprünge 19 - 39 und die Nuten 61 - 81 beginnen jeweils im Abstand von den ebenen Außenflächen 11 - 31. Zwischen den ebenen Außenflächen 11 - 31 und dem Beginn der Vorsprünge 19 bis 39 bzw. der Nuten 61 bis 81 liegt ein Teil der äußeren Seitenflächen 18 - 38 bzw. 60 - 80, der eben ist und im rechten Winkel zur ebenen Außenfläche 11 - 31 verläuft. Die dreieckförmigen Vorsprünge 19 - 39 und Nuten 61 - 81 weisen jeweils eine nach innen (von der Außenfläche 11 - 31 weg) gerichtete und eine nach außen (zu der Außenfläche 11 - 31 hin) gerichtete Fläche auf, die in entsprechende Richtungen wirkende Kräfte aufnehmen können, also sowohl nach innen gerichtete Kräfte F (Fig. 6 und 7) als auch nach außen gerichtete Kräfte F' (Fig. 6 und 7), so daß die Gliederbahn einer Verformung in beiden Richtungen einen Widerstand entgegensetzt. Dadurch, daß die Vorsprünge 19 - 39 und die Nuten 61 - 81 durchlaufend ausgestaltet sind, wird die Steifigkeit gegen Verwindungen (Torsionssteifigkeit) verbessert.

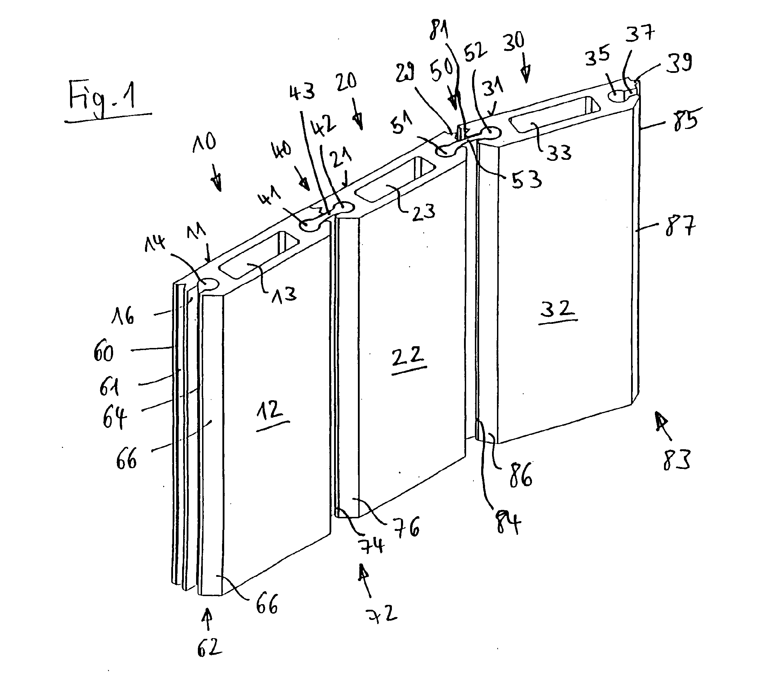

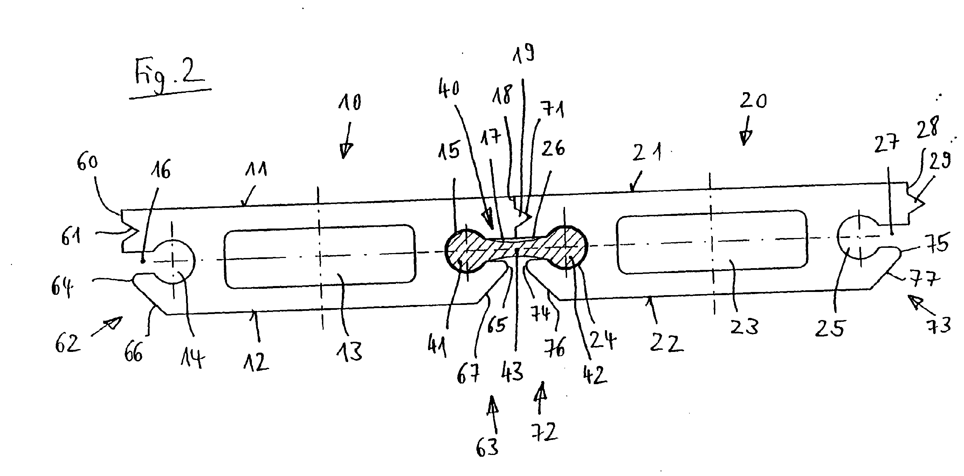

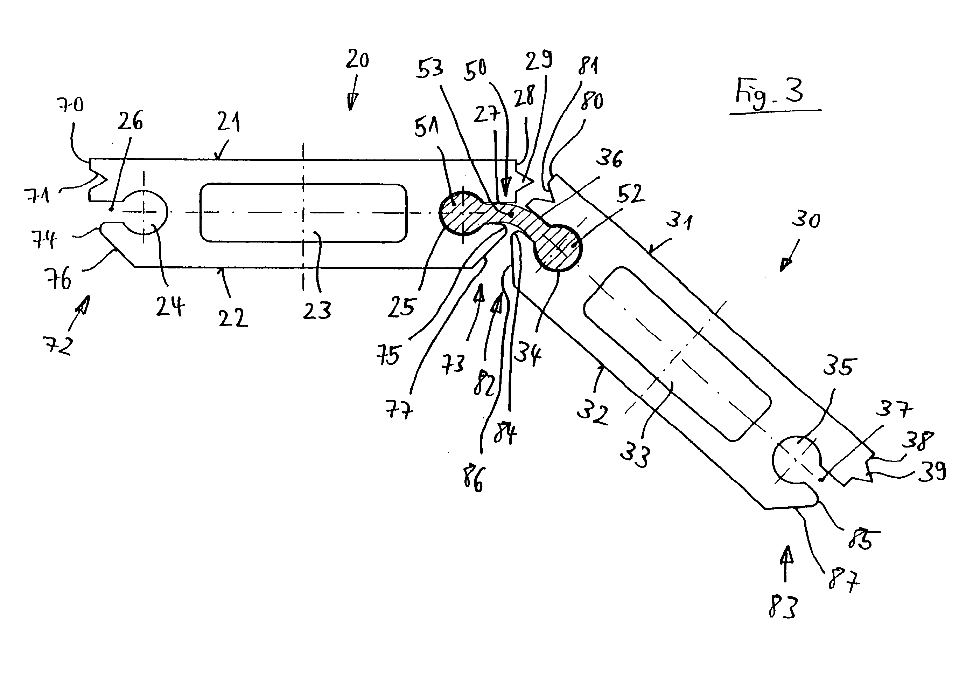

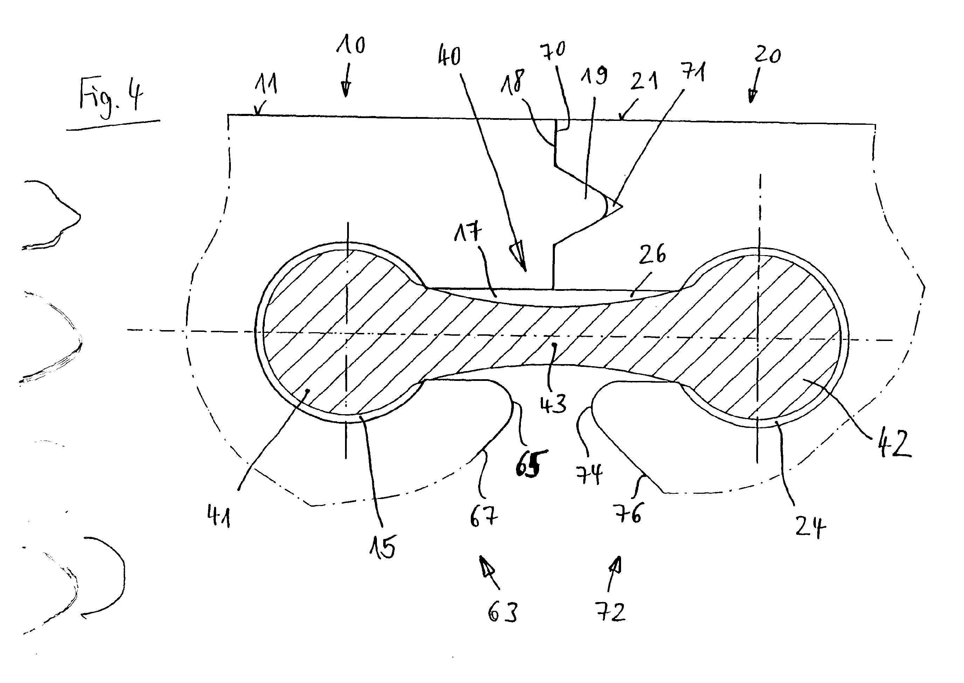

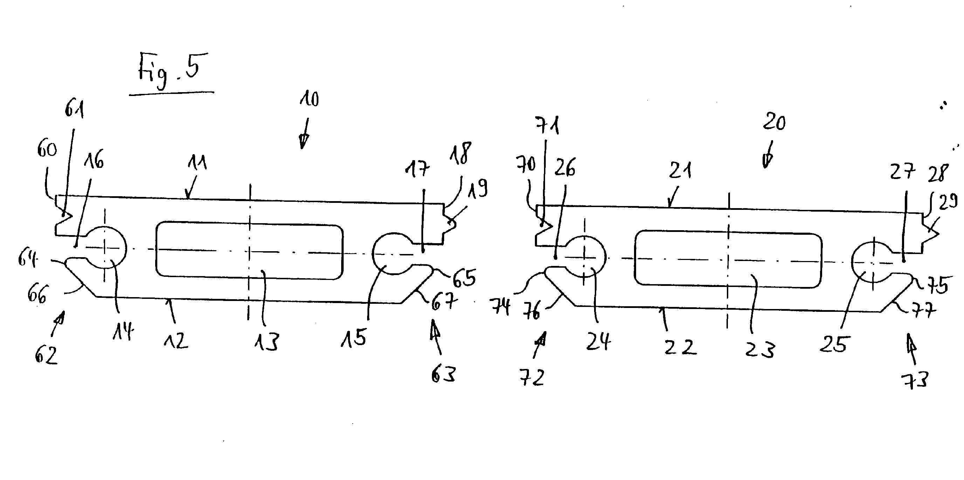

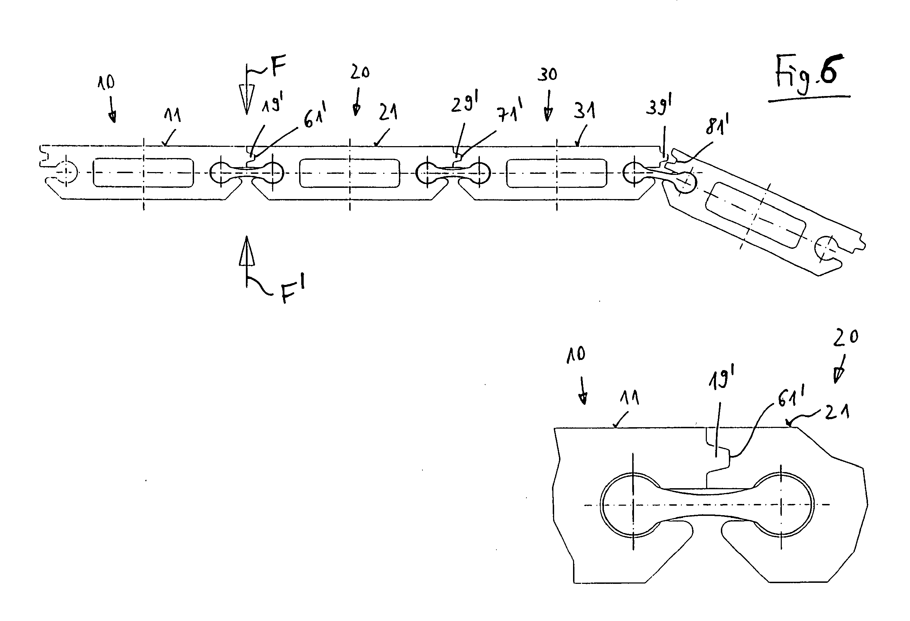

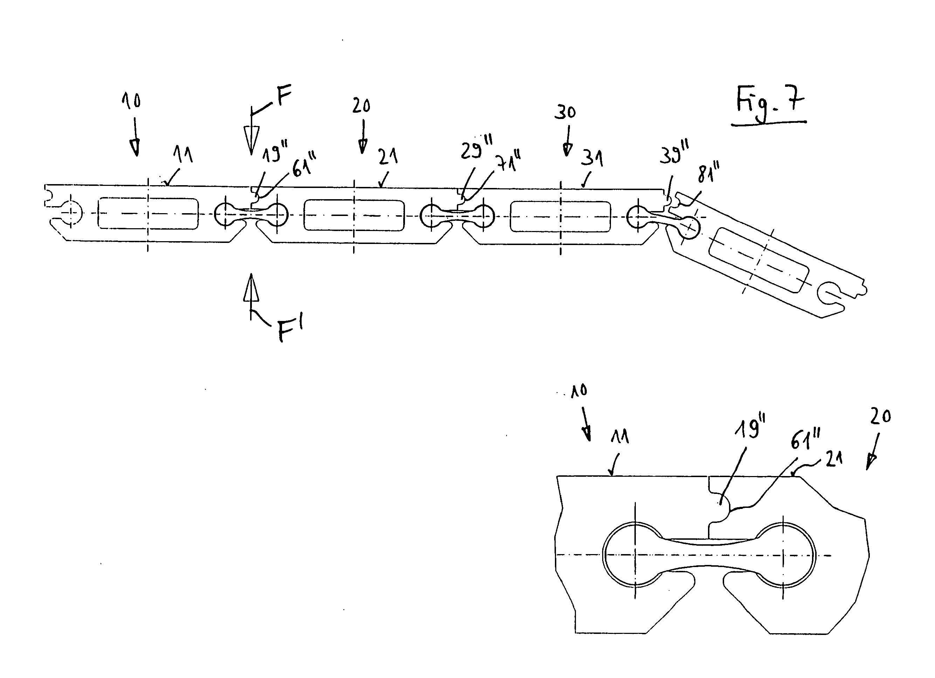

Die inneren Seitenflächen 62, 63; 72, 73; 82, 83 weisen am Ausgang der Kanäle 16 - 37 Abrundungen 64, 65; 74, 75; 84, 85 auf, die über einen Winkelbereich von 135° verlaufen und in Schrägflächen 66, 67; 76, 77; 86, 87 übergehen. Dabei ist der Abstand benachbarter Abrundungen 65, 74; 75, 84 derart bemessen, dass sich diese Abrundungen auch bei der maximalen Verschwenkung benachbarter Glieder, die in Fig. 3 gezeigt ist, nicht berühren. Im Gegensatz zur Lösung nach der EP 1 042 104 B1, bei der die inneren Seitenflächen mit Umlenkradien versehen sind, entlang denen benachbarte Glieder bei einer Relativverschwenkung aufeinander abrollbar sind, ist bei dem in den Figuren 1 bis 5 gezeigten Ausführungsbeispiel eine deartige Berührung der inneren Seitenflächen der Glieder nicht möglich. Grundsätzlich wäre es allerdings auch möglich, die in der EP 1 042 104 B1 gezeigte Ausgestaltung anzuwenden, bei der die inneren Seitenflächen benachbarter Glieder mit Umlenkradien versehen sind, entlang denen benachbarte Glieder bei einer Relativverschwenkung aufeinander abrollbar sind.

Die durchgehenden Vorsprünge 19 - 39 und die zugehörigen durchgehenden Nuten 61 - 81 bewirken einen verbesserten Schutz gegen das Durchdringen von Kühlmittel bzw. Wasser. Sie wirken ähnlich wie einen Labyrinthdichtung. Ferner führen die durchgehenden Vorsprünge 19 - 39, die nach Art von Prismen ausgestaltet sind, und die zugehörigen durchgehenden Nuten 61 - 81 durch die von ihnen bewirkte mechanische Verriegelung zu einer größeren Verwindungssteifigkeit der aus den Gliedern gebildeten Gliederbahn.

Bei der in Fig. 6 gezeigten, abgewandelten Ausführungsform weisen die Vorsprünge 19', 29', 39' jeweils einen trapezförmigen Querschnitt auf, wobei der Winkel zwischen einer Trapezflanke und der Außenfläche 11, 21, 31 jeweils etwa 15° beträgt. Die Vertiefungen 61', 71', 81' sind in entsprechender Weise trapezförmig ausgestaltet. Sie erstrecken sich über die gesamte Länge der Glieder.

Bei der in Fig. 7 gezeigten Ausführungsform weisen die Vorsprünge 19", 29", 39" jeweils einen halbkreisförmigen Querschnitt auf, der sich über einen Winkel von 180° oder annähernd 180° erstreckt. Die Vertiefungen 61 ", 71 ", 81 " sind in entsprechender Weise halbkreisförmig ausgestaltet. Sie erstrecken sich über die gesamte Länge der Glieder.

Auch bei den Ausführungsformen nach Fig. 6 und 7 beginnen die Vorsprünge und Vertiefungen im Abstand von den Außenflächen 11 - 31. Zwischen den Außenflächen 11 - 31 und dem Beginn der Vorsprünge und Vertiefungen befindet sich ein ebener, im rechten Winkel zu den Außenflächen 11 - 31 verlaufender Teil der ebenen Seitenflächen.

## Patentansprüche

1. Gliederbahn, insbesondere Gliederschürze oder Abdeckschürze, zur Abdeckung von Öffnungen, insbesondere von Werkzeugmaschinen, mit Gliedern (10; 20, 30), die durch biegsame Elemente (40; 50) miteinander verbunden sind, wobei die äußere Seitenfläche (18; 28; 38) eines Gliedes (10; 20; 30) einen Vorsprung (19; 29; 39) und die benachbarte äußere Seitenfläche (60; 70; 80) des benachbarten Gliedes (10; 20; 30) eine entsprechende Vertiefung (61; 71; 81) aufweist, so daß zwischen dem Vorsprung und der Vertiefung ein Formschluß besteht,
**dadurch gekennzeichnet,**
**daß** der Vorsprung (19; 29; 39) und die Vertiefung (61; 71; 81) von der ebenen Außenfläche (11, 21, 31) beabstandet sind.

2. Gliederbahn nach Anspruch 1, **dadurch gekennzeichnet, dass** der Vorsprung (19 - 39) einen dreieckförmigen Querschnitt aufweist.

3. Gliederbahn nach Anspruch 1 oder 2, **dadurch gekennzeichnet, daß** der Vorsprung (19', 29', 39') einen trapezförmigen Querschnitt aufweist.

4. Gliederbahn nach einem der vorhergehenden Ansprüche, **dadurch gekennzeichnet, daß** der Vorsprung (19", 29", 39") einen halbkreisförmigen Querschnitt aufweist.

5. Gliederbahn nach einem der vorhergehenden Ansprüche, **dadurch gekennzeichnet, dass** sich der Vorsprung (19 - 39) und die Vertiefung (61 -81) über die gesamte Länge der Glieder (10 - 30) erstrecken.

## Claims

1. Sectional track, in particular a sectional apron or apron cover, for the covering of openings, in particular in machine tools, comprising sections (10; 20, 30) which are joined together by flexible elements (40; 50), the outer side face (18; 28; 38) of a section (10; 20; 30) having a projection (19; 29; 39) and the adjacent outer side face (60; 70; 80) of the adjacent section (10; 20; 30) having a corresponding recess (61; 71; 81), so there is a positive fit between the projection and the recess, **characterised in that** the projection (19; 29; 39) and the recess (61; 71; 81) are set apart from the planar outer face (11, 21, 31).

2. Sectional track according to claim 1, **characterised in that** the projection (19 - 39) has a triangular cross-section.

3. Sectional track according to claim 1 or 2, **characterised in that** the projection (19', 29', 39') has a trapezoidal cross-section.

4. Sectional track according to any one of the preceding claims, **characterised in that** the projection (19', 29', 39') has a semicircular cross-section.

5. Sectional track according to any one of the preceding claims, **characterised in that** the projection (19 - 39) and the recess (61 - 81) extend over the entire length of the sections (10 - 30).

## Revendications

1. Bande à maillons, en particulier tablier à maillons ou tablier de protection, destiné à recouvrir des ouvertures, notamment de machines-outils, avec des maillons (10 ; 20 ; 30) qui sont reliés les uns aux autres par des éléments flexibles (40 ; 50), la surface latérale extérieure (18 ; 28 ; 38) d'un maillon (10 ; 20 ; 30) comprenant une saillie (19 ; 29 ; 39) et la surface latérale extérieure voisine (60 ; 70 ; 80) du maillon voisin (10 ; 20 ; 30) un creux correspondant (61 ; 71 ; 81), de sorte qu'il existe une complémentarité de forme entre la saillie et le creux,
**caractérisée en ce que**
la saillie (19 ; 29 ; 39) et le creux (61 ; 71 ; 81) sont distants de la surface extérieure plane (11 ; 21 ; 31).

2. Bande à maillons selon la revendication 1, **caractérisée en ce que** la saillie (19 à 39) comprend une section transversale triangulaire.

3. Bande à maillons selon la revendication 1 ou 2, **caractérisée en ce que** la saillie (19', 29', 39') comprend une section transversale trapézoïdale.

4. Bande à maillons selon l'une quelconque des revendications précédentes, **caractérisée en ce que** la saillie (19", 29", 39") comprend une section transversale en forme de demi-cercle.

5. Bande à maillons selon l'une quelconque des revendications précédentes, **caractérisée en ce que** la saillie (19 à 39) et le creux (61 à 81) s'étendent sur toute la longueur des maillons (10 à 30).
